(19) Europäisches Patentamt
European Patent Office
Office européen des brevets

(11) EP 2 280 602 B1

(12) **EUROPÄISCHE PATENTSCHRIFT**

(45) Veröffentlichungstag und Bekanntmachung des Hinweises auf die Patenterteilung:
**19.08.2015 Patentblatt 2015/34**

(21) Anmeldenummer: **09738127.1**

(22) Anmeldetag: **28.04.2009**

(51) Int Cl.:
***A01N 43/10*** *(2006.01)* ***A01N 43/56*** *(2006.01)*
***A01N 43/42*** *(2006.01)* ***A01P 13/00*** *(2006.01)*

(86) Internationale Anmeldenummer:
**PCT/EP2009/055093**

(87) Internationale Veröffentlichungsnummer:
**WO 2009/133083 (05.11.2009 Gazette 2009/45)**

(54) **HERBIZIDE MISCHUNG**

HERBICIDE MIXTURE

MÉLANGE HERBICIDE

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**
Benannte Erstreckungsstaaten:
**AL BA RS**

(30) Priorität: **29.04.2008 EP 08155351**

(43) Veröffentlichungstag der Anmeldung:
**09.02.2011 Patentblatt 2011/06**

(73) Patentinhaber: **BASF SE**
**67056 Ludwigshafen (DE)**

(72) Erfinder:
- **KOLB, Klaus**
  **67105 Schifferstadt (DE)**
- **GREGORI, Wolfgang**
  **67067 Ludwigshafen (DE)**
- **KRAPP, Michael**
  **67122 Altrip (DE)**
- **GRIVEAU, Yannick**
  **67346 Speyer (DE)**

(56) Entgegenhaltungen:
**WO-A1-2005/015999**

- **BADOWSKI M.,KUCHARSKI M.: "POSSIBILITIES OF CHEMICAL WEED CONTROL IN WHITE MUSTARD (SINAPIS ALBA) CROP" PROGRESS IN PLANT PROTECTION, Bd. 47, Nr. 3, 2007, Seiten 43-46, XP002590672**
- **"Frontier, Frontier Max: dimethenamid, dimethenamid-p"[Online] 25. November 2002 (2002-11-25), XP002590673 Ontario Ministry of Agriculture, Food, and Rural Affairs. Gefunden im Internet: URL:http://www.omafra.gov.on.ca/ english/cr ops/facts/notes/dimethen.htm> [gefunden am 2010-07-07]**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

**Beschreibung**

Die vorliegende Erfindung betrifft eine Zusammensetzung, bestehend aus

A) der Verbindung der Formel I, Metazachlor,

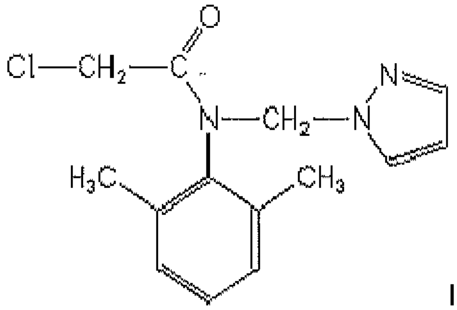

I

wobei die Verbindung der Formel I selbst in suspendierter Form vorliegt,
B) der Verbindung der Formel II, Dimethenamid,

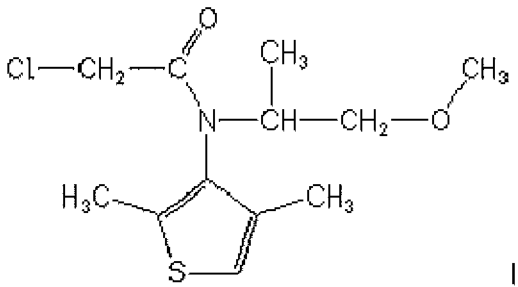

II

wobei die Verbindung der Formel II selbst in emulgierter Form vorliegt und
C) der Verbindung der Formel III, Quinmerac,

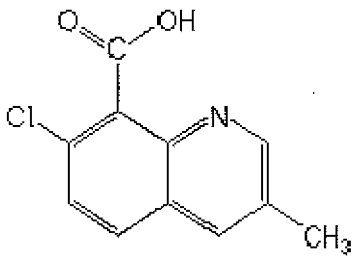

III

wobei die Verbindung der Formel III selbst in suspendierter Form vorliegt.

Die erfindungsgemäße Zusammensetzung ist herbizid wirksam.
Weiterhin sind Gegenstand der Erfindung Mittel, wie beispielsweise die anwendungsbereite Spritzbrühe, die aus der Zusammensetzung, sowie mindestens einem festen oder flüssigen Trägerstoff und gegebenenfalls mindestens einem grenzflächenaktiven Stoff bestehen.
Verfahren zur Herstellung der Zusammensetzung beziehungsweise der Mittel und ihre Verwendung sowie Verfahren zur Bekämpfung unerwünschten Pflanzenwuchses sind ebenfalls Gegenstand dieser Erfindung.
Weitere Ausführungsformen der vorliegenden Erfindung sind den Ansprüchen, der Beschreibung und den Beispielen zu entnehmen.
Die Verbindung der Formel I, Metazachlor, gehört zur Verbindungsklasse der Chloracetanilid-Herbizide, die an sich bekannt ist (The Pesticide Manual, tenth Edition, 1994, p. 667). Methoden zu ihrer Herstellung werden beispielsweise in der EP 0 411 408 beschrieben.
Metazachlor wird im allgemeinen in Raps- und Gemüsekulturen eingesetzt. Unter Metazachlor wird im folgenden

2-Chlor-(2',6'-dimethyl-N-pyrazol-1-yl-methyl)-acetanilid in allen seinen Kristallmodifikationen, insbesondere der triklinen und monoklinen Modifikation verstanden, wobei das in EP 0 411 408 und in EP 1 342 412 beschriebene monokline Metazachlor ausdrücklich mit umfasst ist. Als SC-Formulierung liegt Metazachlor beispielsweise im Handelsprodukt Butisan® S vor.

Die Verbindung der Formel II, Dimethenamid, gehört zur Verbindungsklasse der Amid-Herbizide, die ebenfalls an sich bekannt ist (The Pesticide Manual, tenth Edition, 1994, p. 345). Methoden zu ihrer Herstellung werden beispielsweise in der EP 0 210 320 beschrieben. Unter Dimethenamid werden alle isomeren Formen von 2-chloro-*N*-(2,4-dimethyl-3-thienyl)-*N*-(2-methoxy-1-methylethyl)acetamide verstanden, insbesondere das S-Isomer, Dimethenamid-P. Im Handelsprodukt Spectrum® liegt Dimethenamid in einer EC-Formulierung vor.

Ebenfalls als solche bekannt ist die Verbindung der Formel III, Quinmerac, die zur Verbindungsklasse der Quinolincarboxylsäure-Herbizide gehört (The Pesticide Manual, tenth Edition, 1994, p. 893*)*. Methoden zu deren Herstellung werden beispielsweise in der EP 0 277 631 beschrieben. Als SC-Formulierung liegt Quinmerac beispielsweise im Handelsprodukt Butisan® Top zusammen mit Metazachlor vor.

Im Pflanzenschutz, insbesondere bei der Unkrautbekämpfung, kann es notwendig sein, verschiedene Wirkstoffe miteinander zu kombinieren, deren Wirkung sich optimal im Hinblick auf das Spektrum der Zielpflanzen ergänzt, beziehungsweise deren Wirkung sich bei gemeinsamer Anwendung synergistisch, das heißt mehr als additiv, im Vergleich zu den Einzelanwendungen verstärkt. In der Folge ist es möglich, Applikationsraten herbizider Wirkstoffe zu senken bei gleich guter oder sogar verbesserter Wirkung (Aktivität und Selektivität). Jedoch ist die zu beobachtende Wirkung bei der Verwendung einer Mischung nicht zwingend aus der Wirkung der jeweiligen Einzelverbindungen ableitbar. Es können sowohl die physikalisch-chemische Unverträglichkeit der Wirkstoffe als auch bestimmte biochemische oder biologische Wechselwirkungen auftreten.

In der EP 1 810 570 wird eine herbizide Mischung, enthaltend Dimethenamid und Chloracetanilide offenbart. Mischungen aus Dimethenamid und Metazachlor zeigen eine gute herbizide Wirkung, nicht jedoch gegen alle, zusammen mit bestimmten Kulturpflanzen auftretenden Schadpflanzen.

Aus der WO2005/01 5999 gehen Metazachlor-haltige herbizide Mischungen hervor, wobei jedoch mindestens einer der enthaltenen Wirkstoffe mikroverkapselt sein muss. Das Mikroverkapselungsverfahren ist unter Umständen technisch aufwändig und kann entsprechend zu einer Erhöhung der Produktionskosten und damit des Verkaufspreises des Produktes führen. Zum anderen kann die Mikroverkapselung der Wirkstoffe zu einer geringeren biologischen Verfügbarkeit und damit zu einer schlechteren biologischen Aktivität, also herbizider Wirkung führen.

Eine Aufgabe der vorliegenden Erfindung war es, eine herbizid wirksame Zusammensetzung zu entwickeln, die eine breite Anwendbarkeit hat. Aufgabe der vorliegenden Erfindung war es insbesondere, eine synergistisch herbizid wirksame Zusammensetzung zu entwickeln, die die spezifische Wirksamkeit der Komponenten unterstützt und gleichzeitig die einfache, zuverlässige Anwendung gewährleistet. Dadurch sollte es möglich werden, ökologisch und ökonomisch vorzugehen und dabei noch eine wirksame Unkrautbekämpfung zu ermöglichen.

Diese Aufgabe konnte mit der eingangs beschriebenen Zusammensetzung beziehungsweise den herbizid wirksamen Mitteln gelöst werden.

Der Anwender, beispielsweise der Landwirt, verwendet die erfindungsgemäße herbizide Zusammensetzung beziehungsweise das herbizide Mittel, üblicherweise für die Anwendung in einer Vordosiereinrichtung, im Rückenspritzer, im Spritztank oder im Sprühflugzeug. Dabei wird die herbizide Zusammensetzung mit Wasser und/oder Puffer auf die gewünschte Anwendungskonzentration gebracht, wobei gegebenenfalls weitere Hilfs- und Zusatzstoffe zugegeben werden, und so die anwendungsbereite Spritzbrühe beziehungsweise das erfindungsgemäße herbizide Mittel erhalten wird. Üblicherweise werden 50 bis 1500 Liter der anwendungsbereiten Spritzbrühe pro Hektar landwirtschaftlicher Nutzfläche aufgebracht, bevorzugt 100 bis 400 Liter.

Die erfindungsgemäße Zusammensetzung ist insbesondere herbizid wirksam und besteht aus den Komponenten A), B) und C) in jeweils synergistisch herbizid wirksamen Mengen. Sie ist in ihrer Wirkung für diejenigen Kulturpflanzen selektiv, für welche die Einzelkomponenten selbst auch verträglich sind.

Die Verbindung der Formel I, Metazachlor, liegt in der erfindungsgemäßen Zusammensetzung in suspendierter Form als kristalliner Wirkstoff definierter Partikelgröße in einer flüssigen Phase zusammen mit geeigneten Formulierhilfsstoffen vor. Die mittlere Partikelgröße des Wirkstoffs ist kleiner als 10 $\mu$m, vorzugsweise 1,5 bis 3,0 $\mu$m.

Metazachlor kann in der erfindungsgemäßen Zusammensetzung vollständig in einer nicht-monoklinen, z.B. der triklinen, Modifikation, teilweise in einer nicht-monoklinen, z.B. der triklinen, Modifikation und teilweise in der monoklinen Modifikation oder vollständig in der monoklinen Modifikation vorliegen. Vorzugsweise liegt Metazachlor in der monoklinen Modifikation vor.

Die Aufwandmenge an Komponente A) Metazachlor der erfindungsgemäßen Zusammensetzung beträgt üblicherweise von 100 bis 1500 g/ha, bevorzugt von 250 bis 1000 g/ha. Insbesondere bevorzugt werden Aufwandmengen von 500 bis 750 g/ha.

Das entspricht bei einem üblichen Spritzbrühenvolumen von 100 bis 400 Litern pro Hektar einem Konzentrationsbereich der Komponente A) von 1,25 $g/l_{Spritbrühe}$ bis 7,5 $9/lS_{pritzbrühe}$.

Die Verbindung der Formel II, Dimethenamid, liegt in der erfindungsgemäßen Zusammensetzung in emulgierter Form als öliger Wirkstoff definierter Tropfengröße in flüssiger Phase zusammen mit geeigneten Formulierhilfsstoffen vor. Die mittlere Tropfengröße des Wirkstoffs ist kleiner als 10 $\mu$m, vorzugsweise 2 bis 5 $\mu$m.

Dimethenamid kann in der erfindungsgemäßen Zusammensetzung als R- oder S-Isomer oder als deren Gemisch vorliegen. In einer bevorzugten Ausführungsform ist die Komponente B) das S-Isomer, Dimethenamid-P.

Die Aufwandmenge an Komponente B) Dimethenamid der erfindungsgemäßen Zusammensetzung beträgt üblicherweise von 100 bis 1500 g/ha, bevorzugt von 250 bis 1000 g/ha. Insbesondere bevorzugt werden Aufwandmengen von 250 bis 500 g/ha. Das entspricht bei einem üblichen Spritzbrühenvolumen von 100 bis 400 Litern pro Hektar einem Konzentrationsbereich der Komponente B) von 0,625 $g/l_{Spritzbrühe}$ bis 5 $9/l_{Spritzbrühe}$.

Die Verbindung der Formel III, Quinmerac, liegt in der erfindungsgemäßen Zusammensetzung in suspendierter Form als kristalliner Wirkstoff definierter Partikelgröße in einer flüssigen Phase zusammen mit geeigneten Formulierhilfsstoffen vor. Die mittlere Partikelgröße des Wirkstoffs ist kleiner als 10 $\mu$m, vorzugsweise 1,5 bis 3,0 $\mu$m.

Die Aufwandmenge an Komponente C) Quinmerac der erfindungsgemäßen Zusammensetzung beträgt üblicherweise von 100 bis 500 g/ha, bevorzugt von 200 bis 300 g/ha. Insbesondere bevorzugt werden Aufwandmengen von 250 g/ha. Das entspricht bei einem üblichen Spritzbrühenvolumen von 100 bis 400 Litern pro Hektar einem Konzentrationsbereich der Komponente B) von 0,625 $g/l_{Spritzbrühe}$ bis 2,5 $g/l_{Spritzbrühe}$.

Die Aufwandmenge der Komponenten A), B) und C) der erfindungsgemäßen Zusammensetzung insgesamt liegt üblicherweise zwischen 1000 und 2000 g/ha, bevorzugt bei 1250 g/ha.

Für das erfindungsgemäße Verfahren ist es unerheblich, ob die Herbizide A), B) und C) gemeinsam oder getrennt angewendet werden und, im Falle der getrennten Anwendung, in welcher Reihenfolge. Es ist lediglich erforderlich, dass die Komponenten A), B) und C) in einem Zeitrahmen angewendet werden, der die gleichzeitige Wirkung dieser Herbizide auf die Pflanzen erlaubt.

In einer Ausgestaltungsform sind für den ‚pre-plant burn down' - die Vernichtung unerwünschten Pflanzenwuchses vor der Aussaat der Kulturpflanzen-, 1000 g bis 2000 g in 100 bis 400 Litern Spritzbrühe für eine Fläche von einem Hektar enthalten; in einer weiteren Ausgestaltungsform für den Vor- oder Nachauflauf sind 1000 bis 2000 g, bevorzugt 1250 g in 100 bis 400 Litern Spritzbrühe für eine Fläche von einem Hektar enthalten.

In der erfindungsgemäßen Zusammensetzung liegen die Komponenten A) Metazachlor und b) Dimethenamid üblicherweise in einem Verhältnis (w/w) von 10:1 bis 1:10 vor.

Bevorzugt wird ein Mischungsverhältnis (w/w) der Komponenten A) und B) von 4:1 bis 1:4.

In einer besonders bevorzugten Ausführungsform liegen die Komponenten A) und B) in einem Verhältnis (w/w) von 3:1 bis 1:1 vor.

In der erfindungsgemäßen Zusammensetzung liegen die Komponenten A) Metazachlor und C) Quinmerac üblicherweise in einem Verhältnis (w/w) von 10:1 bis 1:10 vor.

Bevorzugt wird ein Mischungsverhältnis (w/w) der Komponenten A) und C) von 4:1 bis 1:4.

In einer besonders bevorzugten Ausführungsform liegen die Komponenten A) und C) in einem Verhältnis (w/w) von 3:1 bis 1:1 vor.

Die Komponenten A), B) und C) können einzeln oder bereits teilweise oder vollständig miteinander gemischt zur Herstellung der erfindungsgemäßen herbiziden Zusammensetzung verwendet werden. Es ist auch möglich, dass sie wie Teile eines Baukastens (kit of parts) als Kombinationsmittel verpackt und weiterverwendet werden.

In einer erfindungsgemäßen Ausführungsform wird die Komponente A) Metazachlor als reiner Wirkstoff zur Herstellung der herbiziden Zusammensetzung verwendet. Gemäß einer anderen erfindungsgemäßen Ausführungsform liegt die Komponente A) als beispielsweise mit Hilfsstoffen formulierter suspendierter Wirkstoff vor.

In einer weiteren erfindungsgemäßen Ausführungsform wird die Komponente B) Dimethenamid als reiner Wirkstoff zur Herstellung der herbiziden Zusammensetzung verwendet. Gemäß einer anderen erfindungsgemäßen Ausführungsform liegt die Komponente B) als beispielsweise mit Hilfsstoffen formulierter emulgierter Wirkstoff vor.

In einer weiteren erfindungsgemäßen Ausführungsform wird die Komponente C) Quinmerac als reiner Wirkstoff zur Herstellung der herbiziden Zusammensetzung verwendet. Gemäß einer anderen erfindungsgemäßen Ausführungsform liegt die Komponente C) als beispielsweise mit Hilfsstoffen formulierter suspendierter Wirkstoff vor.

Die erfindungsgemäße Zusammensetzung bzw. das erfindungsgemäße herbizide Mittel kann beispielsweise in Form von direkt versprühbaren wässrigen Dispersionen, auch hochprozentigen wässrigen, öligen oder sonstigen Suspensionen oder Emulsionen durch Versprühen, Vernebeln oder Gießen angewendet werden. Die Anwendungsformen richten sich nach den Verwendungszwecken; sie sollten in jedem Fall möglichst die feinste Verteilung der erfindungsgemäßen herbiziden Zusammensetzung gewährleisten.

Wässrige Anwendungsformen der erfindungsgemäßen Zusammensetzung können aus Emulsionskonzentraten, Suspensionen, Pasten, netzbaren Pulvern oder wasserdispergierbaren Granulaten hergestellt werden. Zur Herstellung von Emulsionen, Pasten oder Öldispersionen können die herbizide Zusammensetzung oder deren Komponenten als solche oder in einem Öl oder Lösemittel gelöst, mittels Netz-, Haft-, Dispergier- oder Emulgiermittel in Wasser homogenisiert werden. Es können aber auch aus der herbiziden Zusammensetzung oder deren Komponenten, Netz-,

Haft-, Dispergier- oder Emulgiermittel und eventuell Lösemittel oder Öl bestehende Konzentrate hergestellt werden, die zur Verdünnung mit Wasser geeignet sind.

Pulver-, Streu- und Stäubemittel können beispielsweise durch Mischen oder gemeinsames Vermahlen der Komponenten A), B) und C) mit einem festen Trägerstoff hergestellt werden.

Granulate, beispielsweise Umhüllungs-, Imprägnierungs- und Homogengranulate können durch Bindung der Komponenten A), B) und C) an feste Trägerstoffe hergestellt werden.

Gemäß einer Ausführungsform der Erfindung wird die herbizide Zusammensetzung mit Wasser und/oder Puffer auf die gewünschte Anwendungskonzentration gebracht, wobei gegebenenfalls weitere Hilfs- und Zusatzmittel zugegeben werden.

In einer weiteren Ausführungsform werden die Komponenten A), B) und C) einzeln oder gemischt, gegebenenfalls bereits formuliert, in die Dosiereinrichtung gegeben und auf die gewünschte Anwendungskonzentration verdünnt.

Generell kommen für die Formulierung der einzelnen Komponenten der erfindungsgemäßen Zusammensetzung selbst beziehungsweise zur Herstellung der erfindungsgemäßen Zusammensetzung oder des Mittels, wie beispielsweise der anwendungsbereiten Spritzbrühe, als Hilfs- und Zusatzstoffe beispielsweise in Betracht:

Inerte Zusatz- oder Trägerstoffe wie Mineralölfraktionen von mittlerem bis hohem Siedepunkt, wie Kerosin oder Dieselöl, ferner Kohlenteeröle sowie Öle pflanzlichen oder tierischen Ursprungs, aliphatische, cyclische und aromatische Kohlenwasserstoffe, z.B. Paraffin, Tetrahydronaphthalin, alkylierte Naphtaline oder deren Derivate, alkylierte Benzole oder deren Derivate, Alkohole wie Methanol, Ethanol, Propanol, Butanol, Cyclohexanol, Ketone wie Cyclohexanon oder stark polare Lösemittel, z.B. Amide wie N-Methylpyrrolidon oder Wasser.

Geeignete Adjuvants für eine Formulierung der Komponente A) und/oder gegebenenfalls B) und/oder gegebenenfalls C) sind Pflanzenöle, die teilhydriert und hydriert sein können, modifizierte, z.B. veresterte Pflanzenöle, Mineralöle, Alkoholalkoxylate, Alkoholethoxylate, alkylierte (Ethylenoxid (EO)/ Propylenoxid (PO))-Blockcopolymere, Alkylphenolethoxylate, Polyole, EO/PO-Blockcopolymere, Organosiliziumverbindungen, Alkylglycoside, Alkylpolyglycoside, Alkylsulfate, sulfatierte Alkoholalkoxylate, Alkylarylsulfonate, Alkylsulfonate, Dialkylsulfosuccinate, Phospatierte Alkoholalkoxylate, Fettaminalkoxylate, Ester, Carboxylate, Esterethoxylate, Dialkyladipate, Dicarbonsäurederivate wie sogenannte Kondensate von Bernsteinsäure Anhydrid mit Allylalkohol und Polyalkylenoxid oder Polyhydroxyaminen, Dialkylphtalate, ethoxylierte Sorbitanester und ethoxylierte Glyceride natürlicher Fettsäuren.

Bevorzugte Adjuvants sind Alkoholalkoxylate wie Alkylether von (Ethylenoxid (EO)/ Propylenoxid (PO))-Copolymeren, z.B. Plurafac® (BASF), SynperionicRLF (ICI), Alkoholethoxylate, wobei der Alkohol ein $C_8$-$C_{18}$-Alkohol synthetischer oder natürlicher Herkunft ist, der sowohl linear als auch verzweigt sein kann. Der Ethoxylat-Teil enthält je nach verwendetem Alkohol durchschnittlich von 3 bis 20 Mol Ethylenoxid. Beispielhaft verwendete Produkte sind Lutensol® ON, TO, AO und A der Firma BASF, Alkylarylsulfonate wie Nonylphenolethoxylate mit 5-15 Mol EO, Polyole wie Polyethylenglykol oder Polypropylenglycol, EO/PO-Blockcopolymere wie z.B. Pluronic® PE (BASF) oder Synperionic® PE (ICI),
Organosiliconverbindungen, Alkylpolyglycoside wie z.B. Agrimul®(Henkel KGaA), AG 6202 (Akzo-Nobel) Atplus®450 (ICI) oder Lutensol® GD 70 (BASF), Fettaminalkoxylate wie z.B. Ethomeen® und Armobleem®der Firma Akzo Nobel, Ester natürlicher und synthetischer Fettsäuren wie z.B. Methyloleate oder Methylcocoate, Dialkyladipate, ethoxylierte Sorbitanester natürlicher Fettsäuren, wie Tween® der Firma ICI Surfactants (Tween® 20, Tweeno 85, Tween® 80), ethoxylierte Glyceride natürlicher Fettsäuren, wie z.B. Glycerox® der Firma Croda.

Weitere Beispiele finden sich in:

McCutcheon's; Emulsifiers and Detergents, Volume 1 and 2: Emulsifiers and Detergents 1994; North American Edition; McCutcheon's Division, Glen Rock NJ, USA,

Surfactants in Europe; A Directory of surface active agents available in Europe, 2nd Ed. 1989; Terg Data, Darlington, England,

Ash, Michael; Handbook of cosmetic and personal care additives, 1994; Gower Publishing Ltd, Aldershot, England

Ash, Michael; Handbook of industrial Surfactants, 1993; Gower Publishing Ltd. Aldershot, England.

Puffer oder Pufferlösungen sind Lösungen, die ihren pH-Wert bei Zusatz starker Säuren oder Basen kaum ändern. Pufferlösungen bestehen meist aus einer schwachen Säure, beispielsweise Essigsäure, und einem ihrer Salze, beispielsweise Natriumacetat.

Zur besseren Verarbeitung können weitere Hilfs- und Zusatzstoffe zugegeben werden. Dabei haben sich folgende Komponenten bewährt: weitere Lösemittel, Entschäumer, Puffersubstanzen, Verdicker, Spreitmittel, kompatibilitätsfördernde Mittel, flüssige und feste Träger, Tenside.

Feste Träger sind beispielsweise Mineralerden wie Kieselsäuren, Kieselgele, Silikate, Talkum, Kaolin, Kalkstein,

Kalk, Kreide, Bolus, Löß, Ton, Dolomit, Diatomeenerde, Calcium- und Magnesiumsulfat, Magnesiumoxid, gemahlene Kunststoffe, Düngemittel, wie Ammoniumsulfat, Ammoniumphosphat, Ammoniumnitrat, Harnstoffe und pflanzliche Produkte wie Getreidemehl, Baumrinden-, Holz- und Nußschalenmehl, Cellulosepulver oder andere feste Trägerstoffe.

Als oberflächenaktive Stoffe (Tenside) kommen die Alkali-, Erdalkali-, Ammoniumsalze von aromatischen Sulfonsäuren z.B. Lignin-, Phenol-, Naphthalin- und Dibutylnaphthalinsulfonsäure sowie von Fettsäuren, Alkyl- und Alkylarylsulfonaten, Alkyl-, Laurylether und Fettalkoholsulfaten, sowie Salze sulfatierter Hexa-, Hepta- und Octadecanolen sowie von Fettalkoholglykolether, Kondensationsprodukte von sulfoniertem Naphthalin und seiner Derivate mit Formaldehyd, Kondensationsprodukte des Naphthalins bzw. der Naphthalinsulfonsäure mit Phenol und Formaldhyd, Polyoxyethylenoctylphenol-ether, ethoxyliertes Isooctyl-, Octyl- oder Nonylphenol, Alkylphenyl-, Tributylphenylpolyglykolether, Alkylarylpolyetheralkohole, Isotridecylalkohol, Fettalkoholethylenoxid-Kondensate, ethoxyliertes Rizinusöl, Polyoxyethylen- oder Polyoxyproylennalkylether, Laurylalkoholpolyglykoletheracetat, Sorbitester, Lignin-Sulfitablaugen oder Methylcellulose in Betracht.

Beispiele hierfür werden in Farm Chemicals Handbook 1997; Meister Publishing 1997 S. CI0 "adjuvant" oder 1998 Weed Control Manual S. 86 beschrieben.

Herstellung einer erfindungsgemäßen Zusammensetzung

Die Herstellung einer erfindungsgemäßen Zusammensetzung kann nach an sich bekannten Methoden durch Abmischen der jeweiligen Komponenten, ggf. unter Erwärmen, durch Dispergieren, Emulgieren und/oder Vermahlen erfolgen.

Beispielsweise wird zunächst ein Suspensionskonzentrat enthaltend A) Metazachlor und C) Quinmerac hergestellt, indem diese Wirkstoffe mit Netz- und Dispergiermitteln vorzugsweise in Kugelmühlen oder Rührwerkskugelmühlen bei Temperaturen von 0°C bis 40°C mit Mahlkörpern zerkleinert werden. Das Mahlen wird so lange ausgeführt, bis die mittlere Partikelgröße der kristallinen Wirkstoffe kleiner als 10 μm ist, vorzugsweise 1 bis 10 μm. Mahlkörper sind beispielsweise Glasmahlkörper oder andere mineralische oder metallische Mahlkörper in einer Größe von 0,1 bis 30 mm, vorzugsweise von 0,6 bis 2 mm. Die Wirkstoffkonzentration beträgt in der Regel von 10 bis 60 Gew.-%, bevorzugt von 30 bis 50 Gew.-%.

Die Mahlungen erfolgen zum Beispiel in einer Dynomühle der Fa. Bachofen in sogenannter Passagen- oder Kreisfahrweise. Der Ansatz beträgt in der Regel 0,5 bis 10.000 Liter. Nach mehreren Passagen, bei denen die Mahlsuspension mit Hilfe einer geeigneten Pumpe durch die Mühle gepumpt wird, beträgt die mittlere Partikelgröße 1 bis 10 μm. In der Regel sind fünf Passagen ausreichend.

Anschließend erfolgt die Abmischung des oben beschriebenen technischen Suspensionskonzentrates mit der öligen Komponente B), Dimethenamid, und einem oder mehreren Emulgatoren zu einer stabilen Suspoemulsion.

Die zum Erreichen der spezifizierten Tropfengröße notwendige Energie kann durch einen schnell drehenden statischen Mischer eingetragen werden, bis die mittlere Tropfengröße kleiner als 10 μm, vorzugsweise 2 bis 5 μm ist.

Bestimmungsmethoden:

Die Bestimmung der Partikelgröße, bzw. die Bestimmung der Tröpfchengröße der erfindungsgemäßen Formulierung erfolgte mittels Partikelgrößenanalyse durch Laserbeugungsmethoden. Die Technologie nutzt den optischen Effekt, dass an einem beleuchteten Partikelkollektiv an jedem Partikel ein Teil des auftreffenden Lichtes gestreut und ein Teil absorbiert wird. Die winkelabhängige Streulichtverteilung ist dabei ein Maß für die Dispersitätsgröße. Die Technologie der Laserbeugung zur Partikelanalyse ist inzwischen voll akzeptiert und die Technologie bestens ausgereift. Eine Methode zur Bestimmung der Partikelgröße der erfindungsgemäßen Formulierung ist beschrieben in der Richtlinie CIPAC MT 187.

Die Bestimmung der Homogenität der erfindungsgemäßen Formulierung wurde bestimmt nach der Richtlinie CIPAC MT 180. Es handelt sich um eine standardisierte visuelle Beurteilung von Inhomogenitäten am Boden und im oberen Bereich einer wäßrigen Spritzbrühe in einer sich nach unten verjüngenden Röhre bei Raumtemperatur.

Die Bestimmung der Viskosität der erfindungsgemäßen Formulierung wurde bestimmt nach der Richtlinie OECD Test Guideline 114. Es handelt sich um die Bestimmung der Scherkräfte in einem Kegel-Platte-Viskosimeter bei 20°C.

Es kann von Nutzen sein, die herbizide Zusammensetzung, allein oder in Kombination mit anderen Herbiziden, auch noch mit weiteren Pflanzenschutzmitteln gemischt, gemeinsam auszubringen, beispielsweise mit Mitteln zur Bekämpfung von Schädlingen oder phytopathogenen Pilzen bzw. Bakterien. Von Interesse ist ferner die Mischbarkeit mit Mineralsalzlösungen, welche zur Behebung von Ernährungs- und Spurenelementmängeln eingesetzt werden.

Die erfindungsgemäße Zusammensetzung eignet sich als Herbizid. Die herbizide Zusammensetzung bekämpft Pflanzenwuchs auf Nichtkulturflächen sehr gut.

In Brassica-Kulturen wie Raps (B. napus), Kohlgemüse (B. oleracea var.), Senf (B. juncea, B. campestris, B.

narinosa, B. nigra und B. tournefortii), Stoppelrüben (B. rapa), Rettich (Raphanus sativus), Meerrettich (Armoracia lapathifolia) und Mais (Zea mays) wirkt sie gegen Unkräuter und Schadgräser, ohne die Kulturpflanzen nennenswert zu schädigen. Dieser Effekt tritt vor allem bei niedrigen Aufwandmengen auf. Bevorzugt ist die Anwendung in Raps, Senf und Kohlgemüse. Besonders bevorzugt ist die Anwendung in Raps und Senf.

Darüber hinaus kann die herbizide Zusammensetzung auch in Kulturen, die durch sowohl durch klassische Züchtung als auch durch den Einsatz gentechnischer Methoden gegen die Wirkung von Herbiziden tolerant sind, verwendet werden.

Die erfindungsgemäße Zusammensetzung eignet sich gut zur Bekämpfung von Alopecurus myosuroides, Apera spica-venti, Lolium spec., Hordeum vulgare, Triticum aestivum, Amaranthus spec., Anchusa spec., Anthemis spec., Barbarea vulgaris, Bunias orientalis, Capsella bursa-pastoris, Centaurea cyanus, Chenopodium spec., Conium maculatum, Descurainia sophia, Fumaria officinalis, Galium aparine, Geranium spec., Lamium spec., Matricaria spec., Myosotis arvensis, Papaver rhoeas, Raphanus raphanistrum, Sinapis arvensis, Stellaria media, Sysimbrium spec., Thlaspi arvense, Veronica spec. und Viola spec..

Besonders gute Wirkung wird bei der Bekämpfung von Anchusa spec., Barbarea vulgaris, Bunias orientalis, Capsella bursa-pastoris, Conium maculatum, Descurainia sophia, Galium aparine, Geranium spec.,Raphanus raphanistrum, Sinapis arvensis, Sysimbrium spec. und Thlaspi arvense erzielt.

Die Applikation der herbiziden Zusammensetzung kann im ‚pre-plant burn down' beziehungsweise im Vor- oder Nachauflaufverfahren erfolgen. Ist die herbizide Zusammensetzung für gewisse Kulturpflanzen weniger verträglich, so können Ausbringungstechniken angewandt werden, bei welchen die herbizide Zusammensetzung mit Hilfe der Spritzgeräte so gespritzt wird, dass die Blätter der empfindlichen Kulturpflanzen nach Möglichkeit nicht getroffen werden, während die herbizide Zusammensetzung auf die Blätter darunter wachsender unerwünschter Pflanzen oder die unbedeckte Bodenfläche gelangen (post-directed, lay-by).

Herstellungsbeispiele:

1. Die Komponenten A), B) und C) der erfindungsgemäßen Zusammensetzung wurden wie folgt hergestellt.

A) Metazachlor in suspendierter Form

| | |
|---|---|
| 43,5 Gew.-% | Metazachlor |
| 9 Gew.-% | 1,2-Propylenglykol als Frostschutzmittel |
| 2 Gew.-% | Wettol D1® (Natriumsalz eines Phenolsulfonsäure-Harnstoff-Formaldehyd-Kondensationsproduktes, Firma BASF, Deutschland) als Dispergiermittel |
| 0,3 Gew.-% | Kelzan® (Xanthan Gum-Polysaccharid, Firma Kelco, USA) als Verdickungsmittel |
| 0,2 Gew.-% | Acticide MBS (Bakterizid, Fa. Thor Chemie) |
| 0,5 Gew.-% | Silfoam SRE (Dimethylsiloxanes, Fa. Wacker) als Antischaummittel |
| 3 Gew.-% | Pluronic PE® 10500 (Blockpolymerisat mit Polypropylenoxidkern der ungefähren Molmasse 3250, auf den bis zu einem Molekulargewicht von ungefähr 6500 Ethylenoxid aufgepropft ist) als Dispergiermittel und |
| 41,5 Gew.-% | Wasser |

B) Dimethenamid in emulgierter Form

| | |
|---|---|
| 64 Gew.-% | Dimethenamid-P |
| 10 Gew.-% | AtloxAl-2927(PolymerischesAminphosphat, Fa. Croda) als Emulgator |
| 26 Gew.-% | Solvesso 200 ND (Petroleum, Fa. Exxon Mobil) als Lösungsmittel |

C) Quinmerac in suspendierter Form

| | |
|---|---|
| 43,5 Gew.-% | Quinmerac |
| 7 Gew.-% | 1,2-Propylenglykol als Frostschutzmittel |
| 0,8 Gew.-% | Wettol D1® (Natriumsalz eines Phenolsulfonsäure-Harnstoff-Formaldehyd-Kondensationsproduktes, Firma BASF, Deutschland) als Dispergiermittel |
| 0,1 Gew.-% | Kelzan® (Xanthan Gum-Polysaccharid, Firma Kelco, USA) als Verdickungsmittel |
| 0,2 Gew.-% | Acticide MBS (Bakterizid, Fa. Thor Chemie) |

(fortgesetzt)

| | |
|---|---|
| 0,5 Gew.-% | Silfoam SRE (Dimethylsiloxanes, Fa. Wacker) als Antischaummittel |
| 3 Gew.-% | Pluronic PE® 10500 (Blockpolymerisat mit Polypropylenoxidkern der ungefähren Molmasse 3250, auf den bis zu einem Molekulargewicht von ungefähr 6500 Ethylenoxid aufgepropft ist) als Dispergiermittel und |
| 44.9 % | Wasser |

2. Beispiele für erfindungsgemäße herbizide Zusammensetzungen für die Fläche von 1 Hektar:

Zur Herstellung von 100 l einer Spritzbrühe wurden außer Wasser folgende Komponenten verwendet:

- 1 l der Mischung A) wie oben beschrieben
- 0,8 der Mischung B) wie oben beschrieben
- 1 l der Mischung C) wie oben beschrieben

Die einzelnen Komponenten wurden in die Dosiereinrichtung gegeben, mit Wasser ad 100 l aufgefüllt und gerührt. Es kann von Vorteil sein, einen Teil des benötigten Wassers vorzulegen.

Anwendungsbeispiele:

Die herbizide Wirkung der erfindungsgemäßen Zusammensetzung beziehungsweise der herbiziden Mittel ließ sich durch Gewächshausversuche zeigen.

Als Kulturgefäß dienten Kunststoffblumentöpfe, die mit lehmigem Sand mit etwa 3% Humusgehalt als Substrat gefüllt waren. Die Samen der Testpflanzen wurden nach Arten getrennt eingesät.

Zum Zweck der Vorauflaufbehandlung wurde die Applikation mit den in Wasser suspendierten oder emulgierten Wirkstoffen direkt nach der Aussaat durchgeführt. Die Kulturgefäße wurden regelmäßig bewässert und bis zum Auflauf der Pflanzen mit Plastikhauben abgedeckt um Keimung und Pflanzenwachstum zu fördern.

Zum Zweck der Nachauflaufbehandlung wurden die Testpflanzen je nach Wuchsform erst bis zu einer Wuchshöhe von 3 bis 17 cm angezogen und erst dann mit den in Wasser suspendierten oder emulgierten Wirkstoffen behandelt. Die Testpflanzen wurden dafür entweder direkt gesät und in den gleichen Gefäßen aufgezogen oder sie wurden erst als Keimpflanzen getrennt angezogen und einige Tage vor der Behandlung in die Versuchsgefäße verpflanzt.

Die Pflanzen wurden artenspezifisch bei Temperaturen von 15°C bis 25°C bzw. 20°C bis 35°C gehalten. Die Versuchsperiode erstreckte sich über 3 Wochen. Während dieser Zeit wurden die Pflanzen gepflegt, und ihre Reaktion auf die einzelnen Behandlungen wurde ausgewertet.

Bewertet wurde nach einer Skala von 0-100. Dabei bedeutet "100" völlige Zerstörung zumindest der oberirdischen Pflanzenteile und "0" keine Schädigung oder normaler Wachstumsverlauf im Vergleich zu einer unbehandelten Kontrolle.

Die Applikation im Gewächshaus erfolgte bei einer Anwendungsmenge der Spritzbrühe von 375 l/ha.

Metazachlor wurde als handelsübliche SC-Formulierung (suspension concentrate) mit einem Wirkstoffgehalt von 500 g/l verwendet (Butisan® S).

Dimethenamid-P wurde als handelsübliche EC-Formulierung (emulsifiable concentrate) mit einem Wirkstoffgehalt von 720 g/l verwendet (Spectrum®).

Quinmerac wurde als SC-Formulierung mit einem Wirkstoffgehalt von 100 g/l verwendet.

| Pflanzenart | lateinischer Name | Pflanzenart | lateinischer Name |
|---|---|---|---|
| ALOMY | Alopecurus myosuroides | GALAP | Galium aparine |
| APESV | Apera spica-venti | GERSS | Geranium spec. |
| LOLMU | Lolium multiflorum | MATIN | Matricaria inodora |
| HORVW | Hordeum vulgare | STEME | Stellaria media |
| TRZAW | Triticum aestivum | SYSOF | Sysimbrium officinale |
| BRSNW | Brassica napus | THLAR | Thlaspi arvense |
| CAPBP | Capsella bursa pastoris | VERPE | Veronica persica |

Die erfindungsgemäße Zusammensetzung zeigte eine sehr gute Wirkung gegen die oben genannten Schadpflanzen und gute Verträglichkeit gegenüber den Kulturpflanzen.

Feldversuche:

Die herbizid aktiven Verbindungen der Komponente A), B) und C) wurden entweder alleine oder in direkter Mischung als Suspension, Emulsion, Suspoemulsion oder wässrige Lösung ausgebracht. Für die Komponenten A) und B) wurden die jeweiligen auf dem Markt verfügbaren BASF-Handelsprodukte BUTISAN® oder SPECTRUM® eingesetzt. BUTISAN® enhält 500 g/l Metazachlor als Suspensionskonzentrat (SC), SPECTRUM® enthält 720 g/l Dimethenamid-P als Emulsionskonzentrat (EC). Die Komponente C) wurde als WP-Formulierung mit einer Konzentration von 50% verwendet.

Bei der Mischung aus den Komponenten A), B) und C) wurde eine aus diesen drei Komponenten bestehende Suspoemulsions-Formulierung mit 200 g/l Metazachlor, 200 g/l Dimethenamid-P und 100 g/l Quinmerac eingesetzt.

Die Applikation erfolgte im Freiland unter Verwendung eines mobilen motorisierten Parzellenspritzgerätes bei einem Sprühvolumen von 200 l/ha Wasser.

Bodenbearbeitung und Aussaat der Kultur Raps erfolgten unter praxisüblichen Bedingungen. Vorauflauf-Anwendungen wurden direkt nach der Aussaat der Kultur, jedoch vor dem Auflauf der Unkräuter vorgenommen.

Die Wirkung der applizierten Verbindungen wurde regelmäßig überprüft, wobei sich der Beobachtungszeitraum vom Applikationstermin bis zum Beginn des Längenwachstums der Kultur erstreckte. Die durch die Applikation der herbizid aktiven Verbindungen hervorgerufenen Schäden wurden auf einer Prozentskala (0-100%) bewertet. Als Vergleich diente eine unbehandelte Kontrollparzelle. Der Wert 0% gibt an, dass die Pflanze keine Schädigung zeigt, während 100% eine komplette Abtötung der Pflanze bedeutet.

Bei den folgenden Beispielen wurde nach der Methode von S. R. Colby (1967) "Calculating synergistic and antagonistic responses of herbicide combinations", Weeds 15, S. 22ff. derjenige Wert E errechnet, der bei einer nur additiven Wirkung der Einzelwirkstoffe zu erwarten ist.

$$E=(x+y+z)-(x*y+x*z+y*z)/100+(x*y*z)/10000$$

wobei

X = Prozentsatz Wirkung mit Wirkstoff A bei einer Aufwandmenge a;
Y = Prozentsatz Wirkung mit Wirkstoff B bei einer Aufwandmenge b;
Z = Prozentsatz Wirkung mit Wirkstoff C bei einer Aufwandmenge c;
E = zu erwartende Wirkung (in %) durch A + B + C bei Aufwandmengen a + b + c bedeuten.

Ist der experimentell gefundene Wert höher als der nach Colby errechnete Wert E, so liegt eine synergistische Wirkung vor.

Die in den Feldversuchen verwendeten Pflanzen setzen sich aus den folgenden Arten zusammen:

| Pflanzenart | Lateinischer Name | Deutscher Name |
|---|---|---|
| SINAL | Sinapis arvenis | Weisser Senf |
| CENCY | Centaurea cyanus | Kornblume |

Die Ergebnisse der Tests sind in den nachfolgenden Tabellen der Anwendungsbeispiele 1 und 2 angegeben und belegen die synergistische Wirkung der erfindungsgemäßen Mischungen.

Hierbei bedeuten a.S. = aktive Substanz, bezogen auf 100 % Wirkstoff. Die nach Colby errechneten Werte E sind in Klammern () in den Anwendungsbeispielen 1 bis 23 angegeben.

Anwendungsbeispiel 1:

Synergistische herbizide Wirkung gegen SINAL im Vorauflaufverfahren

| Wirkstoff | Aufwandmenge a.S. in g/ha | Herbizide Wirkung in % nach 28-34 Tagen |
|---|---|---|
| A) Metazachlor | 400 | 35 |
| B) Dimethenamid-P | 400 | 30 |
| C) Quinmerac | 200 | 20 |
| A + B + C | 400 + 400 + 200 | 72 (64) |

Vergleichsversuch: herbizide Wirkung der Wirkstoffkombination aus WO 2005/015999 gegen SINAL im Vorauflaufverfahren

| Wirkstoff | Aufwandmenge a.S. in g/ha | Herbizide Wirkung in % nach 28-34 Tagen |
|---|---|---|
| A* + B + C | 400 + 400 + 200 | 50 |
| A* = Metazachlor mikroverkapselt | | |

Anwendungsbeispiel 2:

Synergistische herbizide Wirkung gegen CENCY im Vorauflaufverfahren

| Wirkstoff | Aufwandmenge a.S. in g/ha | Herbizide Wirkung in % nach 28-34 Tagen |
|---|---|---|
| A) Metazachlor | 300 | 30 |
| | 400 | 75 |
| B) Dimethenamid-P | 300 | 0 |
| | 400 | 33 |
| C) Quinmerac | 150 | 23 |
| | 200 | 28 |
| A + B + C | 300 + 300 + 150 | 90 (46) |
| | 400 + 400 + 200 | 94(88) |

Vergleichsversuch: herbizide Wirkung der Wirkstoffkombination aus WO 2005/015999 gegen CENCY im Vorauflaufverfahren

| Wirkstoff | Aufwandmenge a.S. in g/ha | Herbizide Wirkung in % nach 28-34 Tagen |
|---|---|---|
| A* + B + C | 300 + 300 + 150 | 60 |
| A* + B + C | 400 + 400 + 200 | 87 |

Die erfindungsgemäßen Zusammensetzungen zeigten bereits bei niedrigen Aufwandmengen sehr gute Wirkung gegen die oben genannten Schadpflanzen und gute Verträglichkeit gegenüber den Kulturpflanzen.

**Patentansprüche**

1. Zusammensetzung, bestehend aus

   A) der Verbindung der Formel I, Metazachlor,

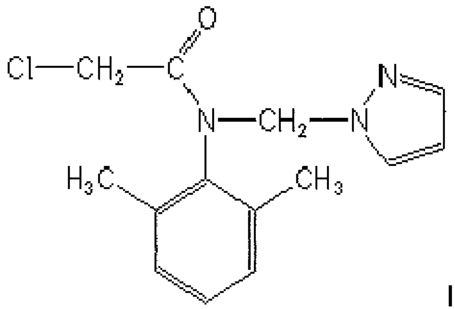

I

wobei die Verbindung der Formel I selbst in suspendierter Form vorliegt,
B) der Verbindung der Formel II, Dimethenamid,

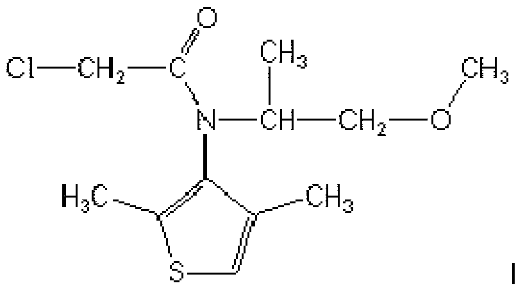

II

wobei die Verbindung der Formel II selbst in emulgierter Form vorliegt und
C) der Verbindung der Formel III, Quinmerac,

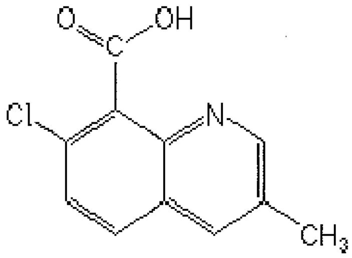

III

wobei die Verbindung der Formel III selbst in suspendierter Form vorliegt.

2. Zusammensetzung nach Anspruch 1, wobei Metazachlor, Dimethenamid und Quinmerac in syngergistisch herbizid wirksamer Menge vorliegen.

3. Zusammensetzung nach Anspruch 1 oder 2, wobei Metazachlor und Dimethenamid in einem Verhältnis (w/w) von 10:1 bis 1:10 vorliegen.

4. Zusammensetzung nach Anspruch 1 oder 2, wobei Metazachlor und Quinmerac in einem Verhältnis (w/w) von 10:1 bis 1:10 vorliegen.

5. Verfahren zur Herstellung einer Zusammensetzung gemäß einem der Ansprüche 1 bis 4, **dadurch gekennzeichnet, dass** man suspendiertes Metazachlor, emulgiertes Dimethenamid und suspendiertes Quinmerac mischt.

6. Herbizid wirksames Mittel, bestehend aus einer Zusammensetzung gemäß einem der Ansprüche 1 bis 4, mindestens einem inerten flüssigen und/oder festen Trägerstoff und gegebenenfalls mindestens einem grenzflächenaktiven Stoff.

7. Verwendung einer Zusammensetzung oder eines Mittels gemäß einem der vorhergehenden Ansprüche zur Bekämpfung unerwünschten Pflanzenwuchses.

**8.** Verwendung nach Anspruch 7 zur Bekämpfung unerwünschten Pflanzenwuchses in Kulturpflanzen.

**9.** Verwendung nach Anspruch 8, wobei die Kulturpflanzen ausgewählt sind unter Raps, Senf und Kohlgemüse.

**10.** Verwendung nach einem der vorhergehenden Ansprüche zur Bekämpfung von Alopecurus myosuroides, Apera spica-venti, Lolium spec., Hordeum vulgare, Triticum aestivum, Amaranthus spec., Anchusa spec., Anthemis spec., Barbarea vulgaris, Bunias orientalis, Capsella bursa-pastoris, Centaurea cyanus, Chenopodium spec., Conium maculatum, Descurainia sophia, Fumaria officinalis, Galium aparine, Geranium spec., Lamium spec., Matricaria spec., Myosotis arvensis, Papaver rhoeas, Raphanus raphanistrum, Sinapis arvensis, Stellaria media, Sysimbrium spec., Thlaspi arvense, Veronica spec. und Viola spec..

**11.** Verwendung nach Ansprch 10 zur Bekämpfung von Anchusa spec., Barbarea vulgaris, Bunias orientalis, Capsella bursa-pastoris, Conium maculatum, Descurainia sophia, Galium aparine, Geranium spec.,Raphanus raphanistrum, Sinapis arvensis, Sysimbrium spec., Thlaspi arvense.

**12.** Verwendung einer Zusammensetzung oder eines Mittels gemäß einem der vorhergehenden Ansprüche als herbizid wirksames Kombinationsmittel, wobei die einzelnen herbizid wirksamen Komponenten gleichzeitig oder getrennt, zeitlich abgestuft angewendet werden können.

**13.** Verfahren zur Bekämpfung unerwünschten Pflanzenwuchses, **dadurch gekennzeichnet, dass** man eine Zusammensetzung oder ein Mittel gemäß einem der vorhergehenden Ansprüche auf die Pflanzen und/oder deren Lebensraum einwirken lässt.

**14.** Verfahren zur Bekämpfung unerwünschten Pflanzenwuchses, **dadurch gekennzeichnet, dass** man die herbizid wirksamen Komponenten einer Zusammensetzung oder eines Mittels gemäß einem der vorhergehenden Ansprüche gemeinsam oder getrennt, gleichzeitig oder nacheinander auf die Pflanzen und/oder deren Lebensraum einwirken lässt.

## Claims

**1.** A composition consisting of

A) the compound of the formula I, metazachlor,

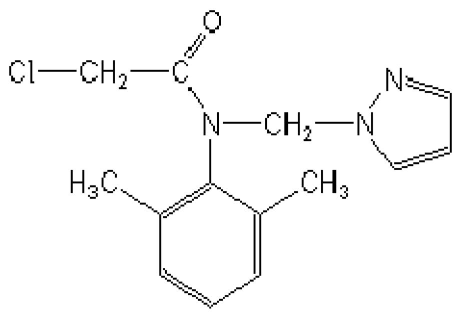

I

the compound of the formula I itself being in suspended form,
B) the compound of the formula II, dimethenamid,

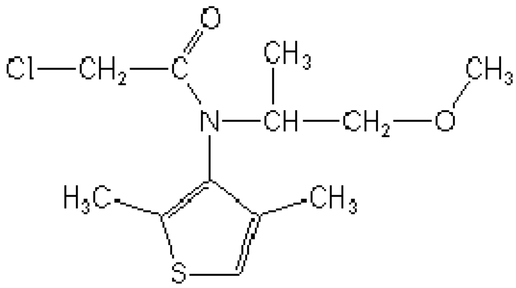

II

the compound of the formula II itself being in emulsified form, and
C) the compound of the formula III, quinmerac,

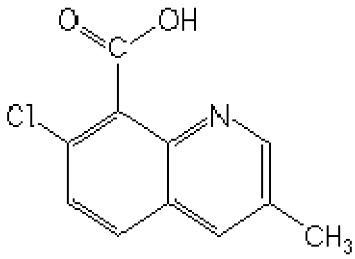

III

the compound of the formula III itself being in suspended form.

2. The composition according to claim 1, wherein metazachlor, dimethenamid, and quinmerac are present in a synergistically herbicidally active amount.

3. The composition according to claim 1 or 2, wherein metazachlor and dimethenamid are present in a ratio (w/w) of 10:1 to 1:10.

4. The composition according to claim 1 or 2, wherein metazachlor and quinmerac are present in a ratio (w/w) of 10:1 to 1:10.

5. A process for preparing a composition according to any of claims 1 to 4, which comprises mixing suspended metazachlor, emulsified dimethenamid, and suspended quinmerac.

6. A herbicidally active product consisting of a composition according to any of claims 1 to 4, at least one inert liquid and/or solid carrier, and optionally at least one surface-active substance.

7. The use of a composition or product according to any of the preceding claims to control unwanted plant growth.

8. The use according to claim 7 to control unwanted plant growth in crop plants.

9. The use according to claim 8, the crop plants being selected from oilseed rape, mustard, and cabbage.

10. The use according to any of the preceding claims to control Alopecurus myosuroides, Apera spicaventi, Lolium spec., Hordeum vulgare, Triticum aestivum, Amaranthus spec., Anchusa spec., Anthemis spec., Barbarea vulgaris, Bunias orientalis, Capsella bursa-pastoris, Centaurea cyanus, Chenopodium spec., Conium maculatum, Descurainia sophia, Fumaria officinalis, Galium aparine, Geranium spec., Lamium spec., Matricaria spec., Myosotis arvensis, Papaver rhoeas, Raphanus raphanistrum, Sinapis arvensis, Stellaria media, Sysimbrium spec., Thlaspi arvense, Veronica spec. and Viola spec..

11. The use according to claim 10 to control Anchusa spec., Barbarea vulgaris, Bunias orientalis, Capsella bursa-pastoris, Conium maculatum, Descurainia sophia, Galium aparine, Geranium spec., Raphanus raphanistrum, Sinapis arvensis, Sysimbrium spec. and Thlaspi arvense.

**12.** The use of a composition or product according to any of the preceding claims as a herbicidally active combination product, it being possible for the individual herbicidally active components to be applied simultaneously or separately, with temporal gradation.

**13.** A method of controlling unwanted plant growth, which comprises causing a composition or product according to any of the preceding claims to act on the plants and/or their habitat.

**14.** A method of controlling unwanted plant growth, which comprises causing the herbicidally active components of a composition or product according to any of the preceding claims to act jointly or separately, simultaneously or successively, on the plants and/or their habitat.

**Revendications**

**1.** Composition, constituée de

A) du composé de formule I, métazachlore

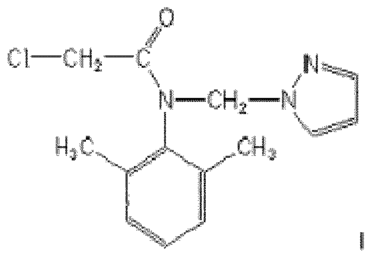

I

le composé de formule I se trouvant lui-même sous forme en suspension,
B) du composé de formule II, diméthénamide,

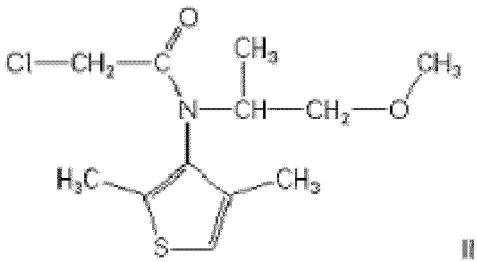

II

le composé de formule II se trouvant lui-même sous forme émulsionnée et
C) du composé de formule III, quinmérac,

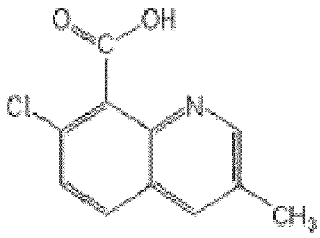

III

le composé de formule III se trouvant lui-même sous forme en suspension.

**2.** Composition selon la revendication 1, dans laquelle le métazachlore, le diméthénamide et le quinmérac sont présents en quantité à activité synergiquement herbicide.

3. Composition selon la revendication 1 ou 2, dans laquelle le métazachlore et le diméthénamide sont présents en un rapport (p/p) de 10:1 à 1:10.

4. Composition selon la revendication 1 ou 2, dans laquelle le métazachlore et le quinmérac sont présents en un rapport (p/p) de 10:1 à 1:10.

5. Procédé pour la préparation d'une composition selon l'une quelconque des revendications 1 à 4, **caractérisé en ce qu'**on mélange du métazachlore en suspension, du diméthénamide émulsionné et du quinmérac en suspension.

6. Produit à activité herbicide, constitué d'une composition selon l'une quelconque des revendications 1 à 4, d'au moins une substance de support solide et/ou une substance de support liquide et éventuellement d'au moins une substance tensioactive.

7. Utilisation d'une composition ou d'un produit selon l'une quelconque des revendications précédentes, pour la lutte contre la croissance de plantes indésirables.

8. Utilisation selon la revendication 7, pour la lutte contre la croissance de plantes indésirables en présence de plantes cultivées.

9. Utilisation selon la revendication 8, dans laquelle les plantes cultivées sont choisies parmi le colza, la moutarde et les choux.

10. Utilisation selon l'une quelconque des revendications précédentes pour la lutte contre *Alopecurus myosuroides, Apera spica-venti, Lolium spec., Hordeum vulgare, Triticum aestivum, Amaranthus spec., Anchusa spec., Anthemis spec., Barbarea vulgaris, Bunias orientalis, Capsella bursa-pastoris*, *Centaurea cyanus, Chenopodium spec., Conium maculatum, Descurainia sophia*, *Fumaria officinalis, Galium aparine*, *Geranium spec., Lamium spec., Matricaria spec., Myosotis arvensis, Papaver rhoeas, Raphanus raphanistrum*, *Sinapis arvensis, Stellaria media, Sysimbrium spec., Thlaspi arvense, Veronica spec.* et *Viola spec.*

11. Utilisation selon la revendication 10 pour la lutte contre *Anchusa spec., Barbarea vulgaris, Bunias orientais, Capsella bursa-pastoris, Conium maculatum, Descurainia sophia*, *Galium aparine*, *Geranium spec., Raphanus raphanistrum, Sinapis arvensis, Sysimbrium spec., Thlaspi arvense.*

12. Utilisation d'une composition ou d'un produit selon l'une quelconque des revendications précédentes en tant que produit comprenant une association de substances à activité herbicide, les composants à activité herbicide individuels pouvant être appliqués simultanément ou séparément, échelonnés dans le temps.

13. Procédé pour la lutte contre la croissance de plantes indésirables, **caractérisé en ce qu'**on fait agir sur les plantes et/ou leur habitat une composition ou un produit selon l'une quelconque des revendications précédentes.

14. Procédé pour la lutte contre la croissance de plantes indésirables, **caractérisé en ce qu'**on fait agir sur les plantes et/ou leur habitat les composants à activité herbicide d'une composition ou d'un produit selon l'une quelconque des revendications précédentes, ensemble ou séparément, simultanément ou successivement.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 0411408 A
- EP 1342412 A
- EP 0210320 A
- EP 0277631 A
- EP 1810570 A
- WO 2005015999 A


### In der Beschreibung aufgeführte Nicht-Patentliteratur


- The Pesticide Manual. 1994, 667
- The Pesticide Manual. 1994, 345
- The Pesticide Manual. 1994, 893
- Emulsifiers and Detergents. **MCCUTCHEON'S.** Emulsifiers and Detergents. 1994, vol. 1, 2
- Surfactants in Europe; A Directory of surface active agents available in Europe. Terg Data. 1989
- **ASH, MICHAEL.** Handbook of cosmetic and personal care additives. Gower Publishing Ltd, 1994
- **ASH, MICHAEL.** Handbook of industrial Surfactants. Gower Publishing Ltd, 1993
- adjuvant. Farm Chemicals Handbook. Meister Publishing, 1997
- Weed Control Manual. 1998, 86